Europäisches Patentamt

European Patent Office

Office européen des brevets

(19)

(11) **EP 1 217 609 A2**

(12) **EUROPEAN PATENT APPLICATION**

(43) Date of publication:
**26.06.2002 Bulletin 2002/26**

(51) Int Cl.⁷: **G10L 15/00**

(21) Application number: **01310399.9**

(22) Date of filing: **12.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.12.2000 GB 0031450**
**12.06.2001 GB 0114247**

(71) Applicant: **Hewlett-Packard Company**
**Palo Alto, CA 94304 (US)**

(72) Inventors:
• **Hinde, Stephen John**
**Bristol BS6 7DH (GB)**
• **Belrose, Guillaume**
**Bristol BS2 8HS (GB)**

(74) Representative: **Squibbs, Robert Francis et al**
**Hewlett-Packard Limited,**
**IP Section,**
**Building 3**
**Filton Road**
**Stoke Gifford, Bristol BS 34 8QZ (GB)**

(54) **Speech recognition**

(57) New spoken languages are provided that can be easily understood by automated speech recognizers associated with equipment, the languages being learnt by human users in order to speak to the equipment. These new languages are simplified in terms of vocabulary and structure and are specifically designed to minimize recognition errors by automated speech recognizers by being made up of phonemes or other uttered elements that are not easily confused with each other by a speech recognizer. The uttered elements are preferably chosen from an existing language. Apparatus and methods for controlling equipment using these recognizer-friendly languages are also provided as are training systems for training human users to speak these languages, and methods and systems for creating new language instances.

**EP 1 217 609 A2**

## Description

### Field of the Invention

The present invention relates to artificial languages for use with automated speech recognition systems.

### Background of the Invention

The new driver of mobility and appliance computing is creating a strong business pull for efficient human computer interfaces. In this context, speech interfaces have many potential attractions such as naturalness and hands-free operation. However, despite 40 years of spoken language systems work, it has proved very hard to train a computer in a human language so that it can have a dialogue with a human. Even the most advanced spoken language systems in the best research groups in the world still suffer the same inadequacies and problems as less advanced speech systems, namely, high set up cost, low efficiency and small domains of discourse.

The present invention concerns an approach to improving speech interfaces that involves the use of artificial language(s) to facilitate automated speech recognition.

Of course, all language is man-made, but artificial languages are made systematically for some particular purpose. They take many forms, from mere adaptations of an existing writing system (numerals), through completely new notations (sign language), to fully expressive systems of speech devised for fun (Tolkien) or secrecy (Poto and Cabenga) or learnability (Esperanto). There have also been artificial languages produced of no value at all such as Dilingo and even artificial language toolkits.

Esperanto, which is probably the best known artificial language, was invented by Dr. Ludwig L. Zamenhof of Poland, and was first presented to the public in 1887. Esperanto has enjoyed some recognition as an international language, being used, for example, at international meetings and conferences. The vocabulary of Esperanto is formed by adding various affixes to individual roots and is derived chiefly from Latin, Greek, the Romance languages, and the Germanic languages. The grammar is based on that of European languages but is greatly simplified and regular. Esperanto has a phonetic spelling. It uses the symbols of the Roman alphabet, each one standing for only one sound. A simplified revision of Esperanto is Ido, short for Esperandido. Ido was introduced in 1907 by the French philosopher Louis Couturat, but it failed to replace Esperanto.

None of the foregoing artificial languages is adapted for automated speech recognition.

### Summary of the Invention

The present invention is based on the creation of new spoken languages that can be easily understood by automated speech recognizers associated with equipment, the language being learnt by human users in order to speak to the equipment.

These spoken languages are hereinafter referred to as "Computer Pidgin Languages" or "CPLs", because like Pidgin languages in general, they are simplified in terms of vocabulary and structure. However, unlike normal human pidgin languages, the CPLs are languages specifically designed to minimize recognition errors by automated speech recognizers. In particular, a CPL language is typically made up of phonemes or other uttered elements that are not easily confused with each other by a speech recognizer, the uttered elements being preferably chosen from an existing language.

The present invention gives rise to CPL-enabled apparatus and methods of controlling equipment using CPLs. The invention also provides training systems for training human users to speak a CPL, and methods and systems for creating new CPLs.

More formally stated, according to one aspect of the present invention, there is provided an artificial spoken language for apparatus control, the language being made up of words formed from a set of phonemes, or other utterance elements, chosen for their low risk of confusion one with another by a speech recogniser.

According to another aspect of the present invention, there is provided a method of constructing an artificial spoken language, comprising the steps of:

- providing a set of phonemes or other utterance elements chosen for their low risk of confusion one with another by a speech recogniser,
- creating words by assembling together said phonemes/utterance elements, and
- storing the set of created words as a new said artificial spoken language.

The present invention also provides apparatus for use in constructing an artificial spoken language, the apparatus comprising a presentation subsystem for presenting to a user a set of phonemes or other utterance elements chosen for their low risk of confusion one with another by a speech recogniser, a user input subsystem for enabling a user to create words by assembling together said phonemes/utterance elements, and a storage subsystem for storing the set of created words as a new said artificial language.

According to a further aspect of the present invention, there is provided a method of controlling apparatus wherein a user uses an artificial language to instruct the apparatus by voice input, the apparatus having an associated speech recogniser and said artificial language being made up of words formed from a set of phonemes, or other utterance elements, chosen for their low risk of confusion one with another by the speech recogniser. The present invention also provides apparatus with a voice-input interface including a speech recogniser adapted to recognise input in the form of an artificial language made up of words formed from a set of phonemes, or other utterance elements, chosen for their low risk of confusion one with another by the speech recogniser.

According to a still further aspect of the present invention, there is provided training system for teaching a person to use an artificial language, the system including an input subsystem for receiving voice input from the user, an analysis subsystem for detecting errors in the pronunciation and/or grammar of the voice input as compared to an expected input that conforms with said artificial language, and an output subsystem for providing feedback to the user concerning the detected errors, said artificial language being made up of words formed from a set of phonemes, or other utterance elements, chosen for their low risk of confusion one with another by a speech recogniser.

According to a yet further aspect of the present invention, there is provided a method of automatically generating candidate artificial spoken language words, the method involving a process that is specifically set to favour artificial-language words which are more easily correctly recognised by a speech recognition system.

## Brief Description of the Drawings

Embodiments of the invention will now be described, by way of non-limiting example, with reference to the accompanying diagrammatic drawings, in which:

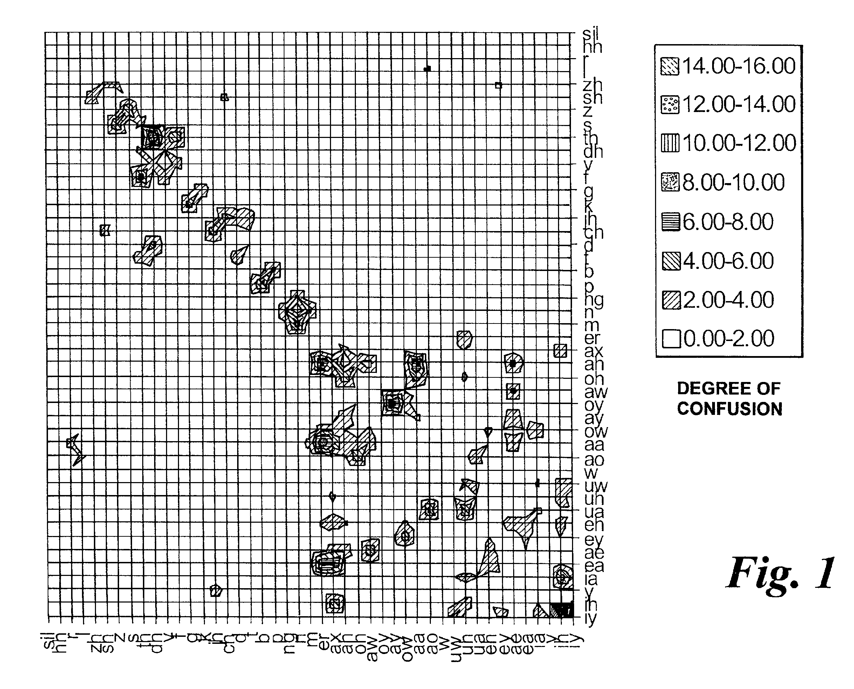

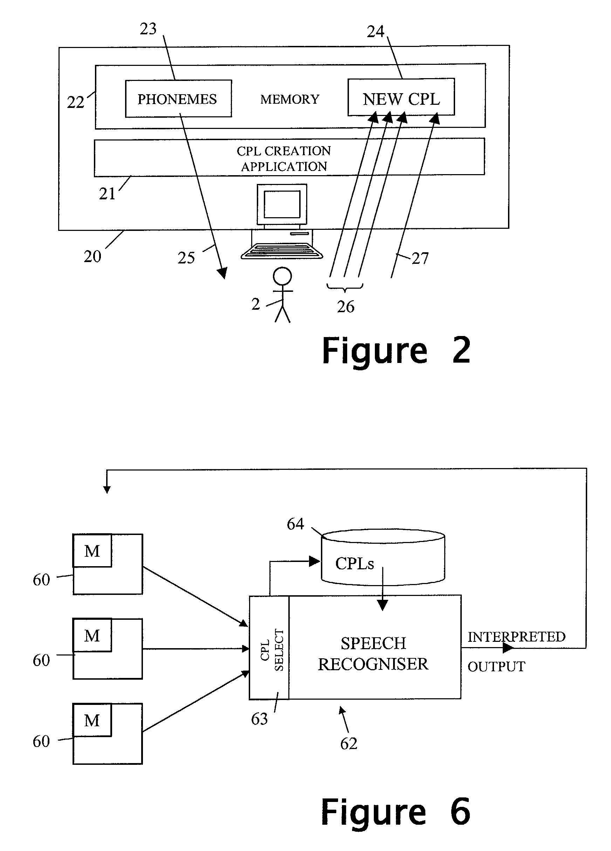

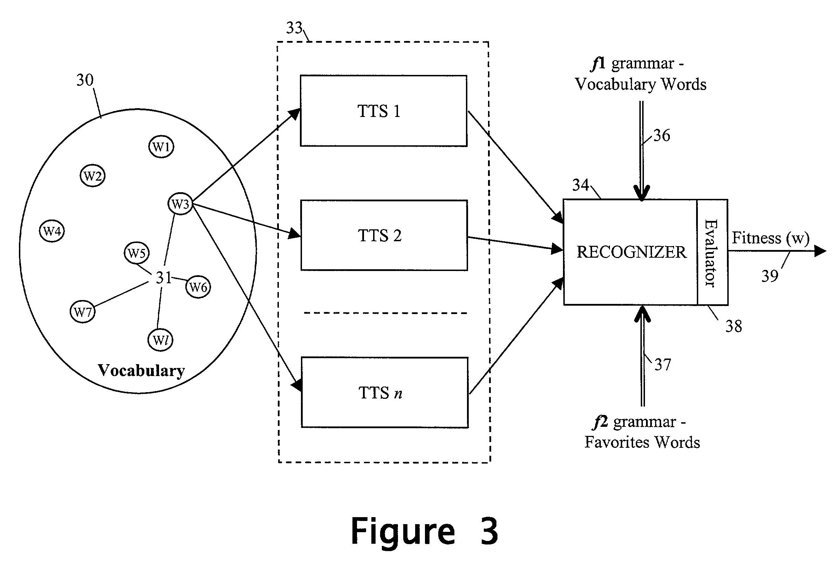

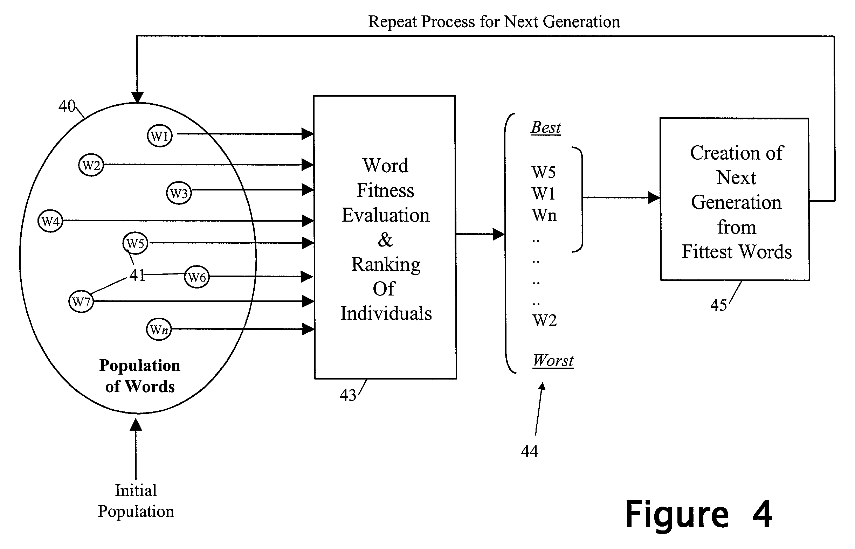

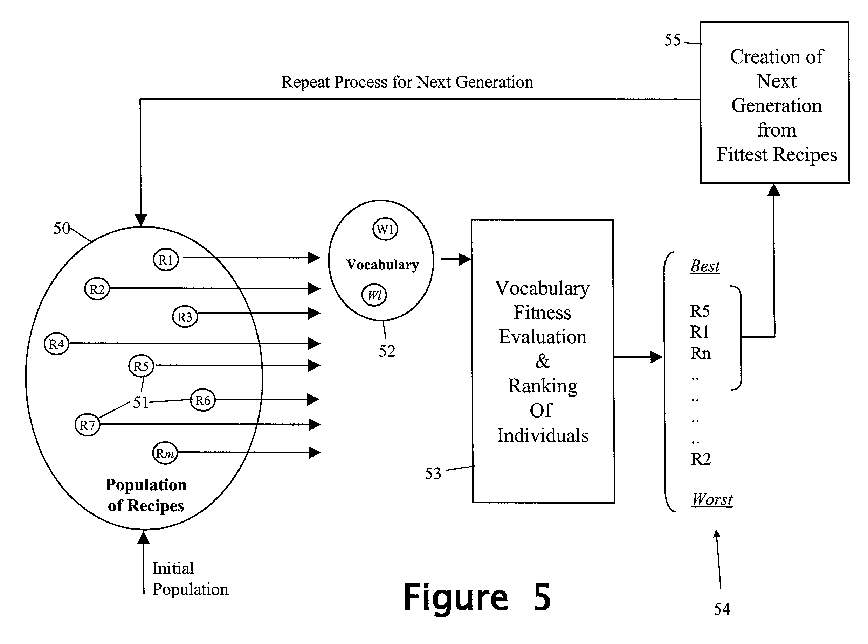

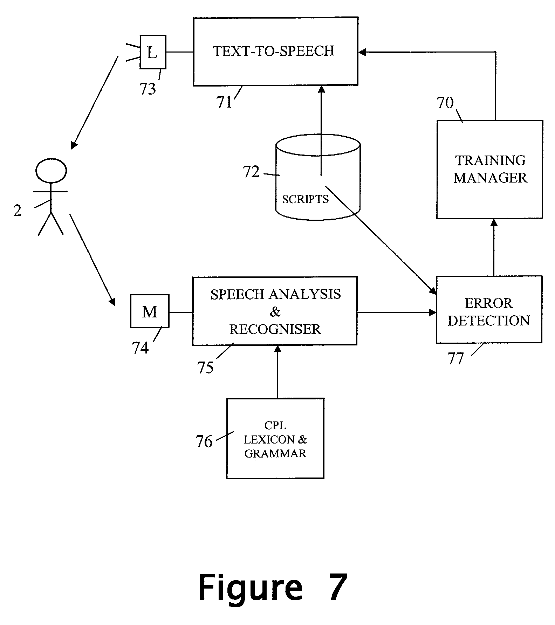

.   **Figure 1** is a confusion matrix for a given set of phonemes;
.   **Figure 2** is a diagram illustrating a basic system for creating a new CPL;
.   **Figure 3** is a diagram illustrating an arrangement for testing the fitness of candidate CPL words;
.   **Figure 4** is a diagram illustrating a first process for generating a new CPL using a genetic algorithm approach;
.   **Figure 5** is a diagram illustrating a second process for generating a new CPL, also using a genetic algorithm approach.
.   **Figure 6** is a diagram illustrating speech recognizer adapted to interpret voice input according to any of multiple CPLs; and
.   **Figure 7** is a diagram illustrating a training system for training a user to speak in a CPL.

## Best Mode of Carrying Out the Invention

As already indicated, the present invention concerns the creation and evaluation of spoken artificial languages (CPLs) that are adapted to be recognised by speech recognisers. A new CPL can be created as required, for example, for use with a new class of device.

A Basic CPL Generation Method

One basic method of creating a new CPL will now be described. This method involves following the simple rules:

1. Pick a subset of phonemes from a specific human language (such as English or Esperanto) that are not easily confused one with another by an automated speech recognition, and are easily recognized. This subset may exhibit a dependency on the speech recognition technology being used; however, since there is generally a large overlap between the subsets of easily recognized phonemes established with different recognition technologies, it is generally possible to choose a subset of phonemes from this overlap area. It should also be noted that the chosen phoneme subset need not be made up of phonemes all coming from the same human language, this being done simply to make the subset familiar to a particular group of human users.

2. Make words up that are easily recognized and distinguished using the phonemes from the subset chosen in (1). The constructed words are, for example, structured as CVC (Consonant Vowel Consonant) like Japanese as this structure is believed to perform best in terms of recognition. Other word structures, such as "CV", are also possible.

3. Pick a filler sound that allows word boundaries to be easily distinguished (this step is optional, particularly where words are intended only to be used individually since silence then constitutes an effective filler).

4. Pick a simple grammar structure with very little ambiguity (again, this step is optional in the sense that where a CPL is based on single word commands, no grammar is required - other than that the command words are to be taken individually).

With respect to the choosing of a low-confusion-risk phoneme subset, a phone confusion matrix can be produced for a particular speech recognizer by comparing the input and output of the recognizer over a number of samples. This matrix indicates for each phone the degree of correlation with all the other phones. In other words, this matrix indicates the likelihood of a phone being mistaken for another during the recognition process. . Figure 1 shows an example confusion matrix produced from a British English corpus, (the illustrated matrix is produced without reference to a language model). This matrix is not symmetrical because the recognizer is not equally trained on all the phones (some of them being more frequent in the training set of data than others).

By examining the matrix, it is readily possible to ascertain which pairings of phonemes should be avoided if confusion is not to result.

Figure 2 illustrates a system 20 by which a user 2 can generate a new CPL according to the process described above. The system 20 is based on a computer running a CPL creation application 21 and storing in memory 22 the low-confusion-risk phoneme subset 23 for a language base (such as British English) selected by the user. This phoneme subset is presented to the user 2 (see arrow 25) who then uses the phonemes as building blocks for constructing new words which are stored back to memory (see arrows 26) as part of the new CPL 24. The user can also specify a grammar for the new CPL, this grammar being stored (see arrow 27) as part of the CPL. The system is also arranged to test out the chosen words for ease of recognition and lack of confusion on a target speech recognizer, the results of this test being fed back to the user; this testing can either be done automatically (for example, whenever a new word is stored) or simply upon user request.

Whilst the human meaning associated with a CPL word is likely to be attributed at this stage (the CPL word may suggest this meaning in the base language), this is not essential. Furthermore, the mapping between the speech recognizer output and the input interface of the apparatus to be controlled ('control' here includes any form of influence) can be deferred to a subsequent stage.

Once a user has defined the scope of a new CPL language (how many words, their general structure, etc.), the CPL creation process can be done in an automatic way by the automatic selection of appropriate combinations of phones that reduce confusion.

Example

The following example of a simple CPL generated with reference to the Figure 1 matrix using the process outlined above.

Consider the case of a simple telephone that can be controlled via a set of 16 CV words to perform the following actions.

    Switch on
    Switch off
    Redial
    Dial <number>
    Hangup
    Answer
    <number> = 0,...9.

By looking at the Figure 1 matrix, it is possible to find some phones that fit well together (i.e minimize the confusion) to produce these 16 words.

| Switch on | [g ow] | as in go |
|-----------|--------|----------|
| Switch off | [s ow] | as in so |

| Answer | [h aa 1 uw] | as in ha loo |
|--------|-------------|--------------|
| Hangup | [b aa] | as in baa |

| Dial | [d ao d ao] | as in dodo (o of born) |
|------|-------------|------------------------|
| Redial | [r aa d ao d ao} | as in raadodo. |

| Zero | [p ow p ow] | as in popo |
|------|-------------|------------|
| One | [n ow n ow} | as in nono |
| Two | [t aa t aa] | as in tata |
| Three | [g ao g ao] | as in gogo |
| Four | [f ow f ow] | as in fofo |
| Five | [f aa f aa] | as in fafa |
| Six | [s aa s aa] | as in sasa |
| Seven | [s uw s uw] | as in soosoo |
| Eight | [h ow h ow] | as in hoho |
| Nine | [n aa n aa] | as in nana |

Whilst the above process and system for generating a CPL is capable of producing useful results, it is not well adapted to produce really efficient CPLs or to take account of criteria additional to low-confusion and ease of recognition.

CPL Generation Using Genetic Algorithms

Several methods of generating CPLs using genetic algorithm (GA) techniques are described below starting with a description of a preferred fitness function used to evaluate candidate CPL words.

*Fitness Measures*

The GA-based CPL generation methods to be described both involve the application of a fitness function to candidate CPL words in order to select individuals to be evolved. In the present case, the fitness function is combination of a first fitness measure $f1$ concerning a first criteria (criteria 1) that candidate CPL word should be easy to recognize correctly by an automatic speech recognizer (ASR) system, and a second fitness measure $f2$ concerning a second criteria (criteria 2) that the word should be easy for a human to learn and remember.

Figure 2 depicts the general process involved in evaluating both the first and second fitness measures. To evaluate a word 31 from a vocabulary 30 of *L* words (W1 to W*l*), the word is spoken to an ASR system 34 and a fitness measure is produced by evaluator 38 on output 39 according to fitness measure $f1$ or $f2$. Whilst the word being evaluated could in theory be spoken by a human to the ASR system 34, practicality requires that a text-to-speech (TTS) system 33 is used, here shown as composed of *n* TTS engines TTS1 - TTS*n* for reasons which will become apparent below.

*First Fitness Measure*

More particularly, in evaluating the first fitness measure *f*1 (how well a word is recognized), the ASR system 34 is installed with a speech grammar setting the ASR system to recognise all the *L* words from the vocabulary 30 (arrow 36). Thus, typically, the grammar takes the form:

Sentence = word1 | word2 | word3 .... |word*l*;
Word1 = "blurp";
...
Wordn = "kligon";

The evaluator 38, in applying the first fitness measure, takes account of whether or not a word is correctly recognised and the confidence score associated with recognition (the confidence score being generated by the ASR system 34 and, in the present example, being assumed to be in the range of -100 to +100 as provided by the Microsoft Speech API). More specifically, for a given word w, the first fitness measure *f*1 (*w*)evaluates as follows:

*rec1(w)*: 1 if the recognizer recognises w when the input is actually w, 0 otherwise;

*score1(w)*: the confidence score attributed to this word by the ASR system.

$$f1(w) = rec1(w) * (100 + score1(w))$$

This evaluation is effected by evaluator 38. Where multiple TTS engines are provided, for each word each engine speaks the word in turn and the evaluator 38 combines the resultant measures produces for each engine to provide an overall first fitness measure for the word concerned.

*Second Fitness Measure*

The second fitness measure *f*2 evaluates how easy a word is to learn and to remember by the user. This notion is quite difficult to assess and in the present case is based on the premise that it will easier for a user to learn and use words that sound familiar to him. Such words are captured by having the user set up a list of the words he likes to hear (called "*favorites* "); alternatively, a core of common real words can be used for this list (for example, if the user does not want to take the time to specify a personal favorites list). The fitness measure *f*2 evaluates how similar a CPL word is to any word from the *favorites* list. To measure this similarity, the ASR system 34 is installed with a grammar that can recognize any words from the *favorites* list (arrow 37). The ASR system is then used to try to recognise words from the vocabulary 30. For a given word w, the second fitness measure *f*2(*w*) evaluates as follows:

*rec2(w)*: 1 if the ASR recognized **any** word from *favorites* while listening to w, 0 otherwise.

*score2(w)*: the confidence score.

$$f2(w) = rec2(w) * (100 + score2(w))$$

For a word *w*, the higher *f2(w)*, the more similar *w* is to a word from the *favorites* list (no matter which one). For example

*favorites* = {boom, cool, table, mouse}
f2("able") = 100 (was mistaken for "table")
f2("spouse") = 60 (was mistaken for mouse)
f2("bool") = 81 (was mistaken for cool)
f2("smooth") = 46 (was mistaken for boom)
f2("steve") = 0
f2("Robert") = 0
f2("paul") = 34 (was mistaken for cool)

*Combining the Measures*

The first and second fitness measures are combined, for example, by giving each a weight and adding them. The weighting is chosen to give, for instance, more importance to *f1* than to *f2*.

*Introducing Additional Factors*

It is possible to cause the fitness measures to take account of certain potentially desirable characteristics by appropriately setting up the evaluation channel (TTS system to ASR system). For example, in order to provide a CPL vocabulary that is speaker-gender independent, multiple TTS engines are provided (as illustrated) corresponding to different genders with the result that the fitness measures will reflect performance for all genders. Similarly:

- Acoustic independence can be included as a factor by testing the spoken words with multiple ASR engines corresponding to different acoustic models;
- Robustness to noise can be included as a factor by introducing some noise into the spoken version of words.

*First GA-Based CPL Generation Method - Word Coding Population (Figure 4)*

In this CPL generation method, a population 40 is composed of individuals 41 that each constitute a candidate CPL word W1 - W*l*. Each individual is coded as a character string (the "DNA" of the individual), for example:

DNA(W1) = "printer",
DNA(W2) = "switch off".

A word is coded using a maximum of p letters chosen from the alphabet. There are 27^p possible combinations (26 + the * wild card letter, standing for no letter). The initial set of words is made of **L** words from a vocabulary of English words (i.e. "print", "reboot", "crash", "windows", etc.) where $L > K$, $K$ being the required number of words in the target CPL vocabulary to be generated.

Starting with the initial population, the fitness of the individual words 41 of the population 40 is evaluated using the above-described fitness function (weighted measures f1 and f2) and the individual words ranked (process 43 in Figure 3) to produce ranking 44. The fittest individuals are then selected and used to create the next generation of the population, by applying genetic operations by mutation and/or cross-over and/or reproduction (box 45). Mutation consists of changing one or more letters in the DNA of a word, for example:

DNA= "printer" → "crinter".

Cross-over consists of exchanging fragments of DNA between individuals, for instance:

"Printer" "Telephone" → "Prinphone" "Teler".

The application of these genetic operators is intended to result in the creation of better individuals by exchanging features from individuals that have a good fitness.

The foregoing process is then repeated for the newly generated population, this cycle being carried either a predetermined number of times or until the overall fitness of successive populations stabilizes. Finally, the $K$ best individuals (words) are selected from the last population in order to form the CPL vocabulary.

The above CPL generation method can be effected without placing any constraints on the form of the words generated by the block 45; however, it is also possible, and potentially desirable, to place certain constraints on word form such as, for example, that consonants and vowels must alternate.

*Second GA-Based CPL Generation Method Vocabulary Coding Population (Figure 5)*

In this CPL generation method, a population 50 is composed of *m* individuals 51 that each constitute a recipe for generating a respective vocabulary of candidate CPL words. The parameters of a recipe are, for example,:

○ Format of the words that can be created
   Example: C V Any-Letter C V
   where C=consonant and V=vowel
○ set of vowels available for use in word generation
○ set of consonant available for use in word generation

with an example individual being:

Format =    C V Any-Letter C V
C set =        {b,c,d,f,h,k,l,p}

V set =        {a,I,o,u}

This individual could create the words
   Balka, coupo, etc...

For each generation of the population, each individual 51, that is, each recipe R1 -R*m*, is used to randomly generate a respective vocabulary 52 of *L* words W1-W*l*. These words are then each evaluated (block 53) using the above-described fitness function (weighted measures *f*1, *f*2) and an average score produced for all words in the vocabulary 52. This score is taken as a measure of the fitness of the recipe concerned and is used to rank the recipes into ranking 54. The fittest recipes are then selected and used to produce the next generation of the recipe population (see block 55) by mutation and/or cross-over and/or reproduction; in other words, these genetic operators are used to changes the parameters of the recipes and produce new ways of creating words. The approach is based on the supposition that after many generations, the best individual recipe will create words with the optimal structure and alphabet; however, by way of a check, the fittest individual in each generation is stored and its fitness compared with that of the fittess individual of the at least the next generation, the fittest individual always being retained. The fittest individual produced at the end of the multiple-generation evolution process is then used to produce a vocabulary of size *L* from which the fittest *K* words are selected.

In a first version of this method, word format is represented by a single parameter, the DNA of an individual taking the form of a sequence of bits that codes this parameter and parameters for specifying the consonant and vowel sets of the recipe, for example:

00 01 10 11 00 1110001110011001100 0110 110111

Here, the first 12 bits code the structure of words that can be generated:

00 → no character
01 → consonant
10 → vowel
11 → any letter
00 → no character

The next 22 bits code the consonant set with a bit value of "1" at position *i* indicating that the consonant at position *i* in a list of alphabet consonants is available for use in creating words. The remaining 6 bits code the vowel set in the same manner; for example the bit sequence "011011" codes the vowel set of {e, i, u, y}.

Examples of words that can be created according to the above example are:
   ora y, aje h

In a second version of this method, each word is made up of a sequence of units each of which has a fixed form. A unit can for example, be a letter, a CV combination, a VC combination, etc. To represent this, each recipe has one parameter for the unit form and a second parameter for the number of units in a word; the recipe also includes, as before, parameters for coding the consonant and vowel sets. In this version of the method, the recipe DNA is still represented as a sequence of bits, for example:

10 110 10011001110011011110 001100

The first 2 bits indicate the form of each unit

10 → VC unit

The next 3 bits code the number of units per word

110→6: 6/2+1 = 4 units per word.

The next 22 bits code the consonants set whilst the final 6 bits code the vowels set. Example of words created by this example recipe are:

obobifiy, okilimox

Other CPL Generation Methods

It will be appreciated that many variants are possible to the above described CPL generation methods, For example, with respect to the GA-based approach to CPL generation, the individuals of a population to be evolved could be constituted by respective vocabularies each of $L$ candidate CPL words, the initial words for each vocabulary being, for instance, chosen at random (subject, possibly, to a predetermined word format requirement). At each generation, the fitness of each vocabulary of the population is measured in substantially the same manner as for the vocabulary 52 of the Figure 4 embodiment. The least-fit vocabularies are then discarded and new ones generated from the remaining ones by any appropriate combination of genetic operations (for example, copying of the fittest vocabulary followed by mutation and cross-over of the component words). The constituent words of the retained vocabularies may also be subject to genetic operations internally or across vocabularies. This process of fitness evaluation, selection and creation of a new generation, is carried out over multiples cycles and the fittest $K$ words of the fittest vocabulary are then used to form the target CPL vocabulary.

In order to speed the creation of a vocabulary with user-friendly words, the words on the favorites list can be used as the initial population of the Figure 4 embodiment, or in the case of the embodiment described in the preceding paragraph, as at least some of the component words of at least some of the initial vocabularies. As regards the Figure 5 embodiment, the constituent consonants and vowels of the words on the favorites list can be used as the initial consonant and vowel sets of the recipes forming the individuals of the initial population.

Whilst the fitness function (weighted measures $f1$, $f2$) in the described embodiments has been used to favour CPL words giving both good speech recogniser performance and user-friendliness (that is, they sound familiar to a user), the fitness function could be restricted to one of $f1$ and $f2$ to select words having the corresponding characteristic, with the other characteristic then being bred into words by tailoring the subsequent genetic operations for appropriately generating the next-generation population. Thus, if the fitness function was set to measure $f1$, it is possible to bias the generation of CPL words towards user-friendly words by making the application of genetic operations, during the creation of the next generation of individuals, in a manner that favours the creation of such words; this can be achieved, for example, in the application of the cross-over operations, by giving preference to new individuals that possess, or are more likely to generate, phoneme combinations that are user-preferred (such as represented by words on a favorites list) or like-sounding phoneme combinations. Similarly, mutation can be effected in a manner tending to favour user-preferred phoneme or phoneme combinations or like-sounding phoneme or phoneme combinations. As already indicated, it is alternatively possible to arrange for the fitness function to be restricted to $f2$ and then apply the genetic operators in a manner favouring the generation of CPL words that are easy to recognise (that is, have a low confusion risk as indicated, for example, by a confusion matrix derived for the recognizer concerned). In fact, although not preferred, the genetic operators can be applied such s to favour the generation of CPL words that are both easy to recognise automatically and are user-friendly thereby removing the need to use the fitness function to select for either of these characteristics; a further alternative would be to do both this and to effect selection based on a fitness function involving both $f1$ and $f2$.

Another GA-based approach to generating words that are both easy to recognise automatically and have a familiarity to a user is simply to alternate the fitness function between $f1$ and $f2$ in successive generation cycles.

Whilst the evaluation method described above with reference to Figure 3 is preferred for effecting measures of ease of recognition and user friendliness of words, other ways of making these measures are also possible. For example, the evaluation of words in terms of how easily they are correctly recognised by a speech recognition system can be effected by analysis of the phoneme composition of the words in relation to a confusion matrix established for a target speech recognition system. As regards the evaluation of words in terms of a familiarity to a human user, this can be effected by analysis of the phoneme composition of the words in relation to that of a set of reference words familiar to a user.

Another possible variant is to select the fitness function so as to directly take account of additional or different fitness criteria, this being in addition to the possibility, discussed above, of introducing factors, such as gender of voice, into the evaluation of $f1$ and/or $f2$.

The above described ways of favouring the creation of CPL words that are both easy to recognise automatically and have a familiarity to a user can be applied to any method of CPL generation and are not restricted to use with a genetic algorithm approach. Thus, for example, the evaluation of words according to a fitness function based on weighted measures $f1$ and $f2$ can be used to evaluate words created according to the process described above with reference to Figure 2.

Levels of CPL

Whatever method is used to generate a CPL, several levels of CPL can be distinguished according to the degree of sophistication involved:

**Level 1 CPL** - has a small vocabulary of discrete words that can used for command and control applications. Such a CPL can be used for controlling appliances. For example: a user could use a CPL word to turn the lights on in their home.; a CPL could be created to give true hands-free operation of a phone handset; a universal device-control 'Esperanto' could be used to talk with appliances and computers anywhere; etc.

**Level 2 CPL** - gives the user enough vocabulary and sentence structure to talk about a particular topic in one domain. For example, the user could talk with a computer-based agent about shipping movements using the CPL language for Shipping.

**Level 3 CPL** - is a language with a vocabulary size and sentence structure sophistication approaching a traditional Pidgin language such as Creole etc. (but, of course, the CPL language has been designed to be very efficient in terms of talking to computers).

Usages

A CPL, once created, would be used in much the same way as an existing language subset to inform a speech recogniser of the lexicon and grammar of the language being recognised. Example usages of a CPL are given below

CPL Speed dialing - CPL contact names.
A mobile phone contains a list of contact names and telephone numbers. Each name from this list can be transformed into a CPL version (CPL nickname) by setting these names as favorites during the CPL generation process. A speech recognizer in the mobile phone is set to recognize the nicknames. In use, when a user wishes to contact a person on the contact names list, the user speaks the nickname to initiate dialing. To assist the user in using the correct nickname, the contact list including both real names and nicknames can be displayed on a display of the phone. By way of example, for a list containing the three names Robert, Steve and Guillaume, three CPL nicknames are created: Roste, Guive, Yomer. They appear on the phone screen as:

Roste     (Robert)
Guive     (Steve)
Yomer     (Guillaume)

CPL to SMS transcriber.
In this case, a mobile phone or other text-messaging device is provided with a speech recognizer for recognizing the words of a CPL. The words of the CPL are assigned to commonly used expressions either by default or by user input. In order to generate a text message, the user can input any of these expressions by speaking the corresponding CPL word, the speech recognizer recognizing the CPL word and causing the corresponding expression character string to be input into the message being generated. Typical expressions that might be represented by CPL words are "Happy Birthday" or "See you later."

Since many different CPLs can be defined, then, at least in device control applications where the number of words in each CPL is likely to be limited, it is convenient to enable a speech recogniser to be capable of recognising multiple CPLs, though the recogniser is preferably informed of the identity of the CPL being used for a current voice input. Thus, with reference to Figure 6, three voice-controlled devices 60, each with voice-input microphone M but each having a different associated CPL, use the same speech recogniser 62. Whenever a device 60 wishes to use the recogniser, it first sends its identity to a CPL select block of the recogniser which looks up (in a table held memory) the CPL appropriate for the device, retrieves this CPL from store 64, and loads the CPL into the recogniser. The recogniser is now set up to interpret the CPL received form the device concerned with the recogniser output being fed back to that device.

Training

Figure 7 illustrates a system for training a user to use a selected CPL. The training is controlled by a training manager function 70 (for example, an application running on a PC). The training manager, after having been told by the user for which CPL language training is required, communicates with a text-to-speech (TTS) converter 70 to run training scripts held in store 72; the manager 70 can also generate text-based messages itself for interpretation by the TTS converter 71. The output of converter 71 is fed to the user 2 over loudspeaker 73.
The user 2 responds to the selected training script (for example, by repeating a converter-spoken CPL word or phrase) and the user's spoken response is picked up by microphone 74 and passed to a speech analysis and recognition block 75 that is informed by the lexicon and grammar 76 of the selected CPL. The output of the speech recogniser 75 and the output expect by the training script are both passed to error detector block 77 that detects and analyses errors in the user's input. The error information is passed to the training manager function 70 that determines what action to take next (repetition of a mis-pronounced word, etc).

**Claims**

1. A method of constructing an artificial spoken language, comprising the steps of:

   - providing a set of phonemes or other utterance elements chosen for their low risk of confusion one with another by a speech recogniser,
   - creating words by assembling together said phonemes/utterance elements, and
   - storing the set of created words as a new said artificial spoken language.

2. Apparatus for use in constructing an artificial spoken language, the apparatus comprising a presentation subsystem for presenting to a user a set of phonemes or other utterance elements chosen for their low risk of confusion one with another by a speech recogniser, a user input subsystem for enabling a user to create words by assembling together said phonemes/utterance elements, and a storage subsystem for storing the set of created words as a new said artificial language.

3. A method of controlling apparatus wherein a user uses an artificial language to instruct the apparatus by voice input, the apparatus having an associated speech recogniser and said artificial language being made up of words formed from a set of phonemes, or other utterance elements, chosen for their low risk of confusion one with another by the speech recogniser.

4. Apparatus provided with a voice-input interface including a speech recogniser adapted to recognise input in the form of an artificial language made up of words formed from a set of phonemes, or other utterance elements, chosen for their low risk of confusion one with another by the speech recogniser.

5. An artificial spoken language for apparatus control, the language being made up of words formed from a set of phonemes, or other utterance elements, chosen for their low risk of confusion one with another by a speech recogniser.

6. A training system for teaching a person to use an artificial language, the system including an input subsystem for receiving voice input from the user, an analysis subsystem for detecting errors in the pronunciation and/or grammar of the voice input as compared to an expected input that conforms with said artificial language, and an output subsystem for providing feedback to the user concerning the detected errors, said artificial language being made up of words formed from a set of phonemes, or other utterance elements, chosen for their low risk of confusion one with another by a speech recogniser.

7. The claimed subject of any one of the preceding claims, wherein the language includes associated grammar rules.

8. The claimed subject of any one of the preceding claims, wherein said phonemes / utterance elements are all chosen from the same human language.

9. The claimed subject of claim 8, wherein the human language is Esperanto or English..

10. A speech recogniser for use by multiple devices that have different associated artificial languages each according to claim 5, the speech recogniser being adapted to receive in association with particular voice input, an indication of the identity of the artificial language used for the input.

11. A method of automatically generating candidate artificial spoken language words, the method involving a process that is specifically set to favour artificial-language words which are more easily correctly recognised by a speech recognition system.

12. A method according to claim 11, wherein said process involves creating words in a manner favouring words that are more easily recognised by a speech recognition system .

13. A method according to claim 12, wherein the creation of words in a manner favouring words that are more easily recognised by a speech recognition system, is effected by choosing phoneme and phoneme combinations which according to a confusion matrix established for a target speech recognition system, are less likely to be confused.

14. A method according to claim 11, wherein said process involves evaluating the words in terms of how easily they are correctly recognised by a speech recognition system and selecting those that are more easily recognised.

15. A method according to claim 14, wherein the evaluation of words in terms of how easily they are correctly recognised by a speech recognition system is effected by analysis of the phoneme composition of the words in relation to a confusion matrix established for a target speech recognition system.

16. A method according to claim 14, wherein the evaluation of words in terms of how easily they are correctly recognised by a speech recognition system is effected by presenting the words to a speech recognition system and measuring the resultant recognition performance.

17. A method according to claim 16, wherein said evaluation is effected by having the words spoken by a text-to-speech conversion system to the speech recogniser system.

18. A method according to claim 17, wherein the channel involving the text-to-speech conversion system and the speech recogniser system is implemented in a manner such that said measure takes account of at least one of:

   - gender independence, for which purpose the text-to-speech system is provided with multiple text-to-speech converters corresponding to different genders to generate spoken versions of the words;
   - acoustic independence, for which purpose the speech recognizer system is provided with multiple speech recognizers corresponding to different acoustic models;
   - robustness to noise, for which purpose noise is introduced into the channel.

19. A set of artificial-language words created by a method according to any one of claims 11 to 18.

20. A computer-readable storage media storing artificial-language words created by a method according to any one of claims 11 to 18.

21. Apparatus including a speech recognition system set to recognise artificial-language words created by a method according to any one of claims 11 to 18.

*Fig. 1*

DEGREE OF CONFUSION

- 14.00-16.00
- 12.00-14.00
- 10.00-12.00
- 8.00-10.00
- 6.00-8.00
- 4.00-6.00
- 2.00-4.00
- 0.00-2.00

Figure 2

Figure 6

Figure 3

EP 1 217 609 A2

Repeat Process for Next Generation

40

(W1)

(W2)

(W3)

(W4)

(W5)

41 (W6)

(W7)

(Wn)

**Population
of Words**

Initial
Population

Word
Fitness
Evaluation
&
Ranking
Of
Individuals

43

*Best*

W5
W1
Wn
..
..
..
..
W2

*Worst*

44

Creation of
Next
Generation
from
Fittest Words

45

Figure 4

Figure 5

EP 1 217 609 A2

**L** 73

TEXT-TO-SPEECH 71

2

72 SCRIPTS

70 TRAINING MANAGER

**M** 74

SPEECH ANALYSIS & RECOGNISER 75

CPL LEXICON & GRAMMAR 76

ERROR DETECTION 77

# Figure 7